Europäisches Patentamt

**European Patent Office**

**Office européen des brevets**

(19)

(11) Numéro de publication : **0 009 843**
**B1**

(12) **FASCICULE DE BREVET EUROPÉEN**

(45) Date de publication du fascicule du brevet :
**24.02.82**

(21) Numéro de dépôt : **79200543.1**

(22) Date de dépôt : **27.09.79**

(51) Int. Cl.³ : **F 02 C   1/02, H 02 K   9/00,
F 02 C   7/12, F 02 C   7/28**

---

(54) **Ensemble turbine de détente-génératrice de courant.**

---

(30) Priorité : **05.10.78 BE 190917**

(43) Date de publication de la demande :
**16.04.80 (Bulletin 80/08)**

(45) Mention de la délivrance du brevet :
**24.02.82 Bulletin 82/08**

(84) Etats contractants désignés :
**AT BE CH DE FR GB IT NL SE**

(56) Documents cités :
**DE - B - 1 022 421**

(73) Titulaire : **ATELIERS DE CONSTRUCTIONS ELECTRI-
QUES DE CHARLEROI (ACEC) Société Anonyme
54, Chaussée de Charleroi
B-1060 Bruxelles (BE)**

(72) Inventeur : **Fremineur, André
19, Rue de Dalhem
B-4540 Vise (BE)**
Inventeur : **Guiette, J.L.
37, Avenue du Pic Vert
B-1640 Rhode-Ste-Genese (BE)**

(74) Mandataire : **Meunier, Marcel et al
ACEC - Service des Brevets Boîte Postale 4
B-6000 Charleroi (BE)**

Imprimerie Jouve, 18, rue St-Denis, 75001 Paris, France

Ensemble turbine de détente-génératrice de courant

La présente invention est relative aux turbines de détente qui entraînent une génératrice de courant électrique et plus particulièrement aux turbines de détente associées à une génératrice de courant électrique, qui constituent l'organe de détente d'un gaz sous pression, par exemple du gaz naturel, destiné à alimenter des utilisateurs situés en aval.

Le fait d'utiliser une turbine comme organe de détente d'un gaz tel que le gaz naturel dans une installation de distribution de gaz sous pression est connu en soi. Toutefois, cette façon de faire présente un inconvénient qui réside dans l'obligation de prévoir des joints de palier très compliqués sur l'arbre d'entraînement de la turbine de manière à éviter une perte de gaz inacceptable.

Il est connu du document DE-B-1022421 un ensemble comprenant au moins une turbine de gaz et une génératrice de courant électrique dans lequel la turbine est reliée de façon étanche à la génératrice de courant électrique, des joints d'étanchéité du type à labyrinthe prévus entre l'ensemble turbine-compresseur et la génératrice de courant laissant passer un débit de gaz de fuite pour assurer le refroidissement de la génératrice. Par contre, il s'agit d'un ensemble à circuit fermé.

Le but de l'invention est un ensemble très compact composé d'une génératrice de courant électrique et d'au moins une turbine de détente pour un gaz à haute pression dont une fraction sert au refroidissement de la génératrice.

Suivant la présente invention, l'ensemble comprenant au moins une turbine de détente d'un gaz à haute pression disponible à l'entrée de l'ensemble et destiné à alimenter des utilisateurs à une pression réduite et une génératrice de courant électrique refroidie par un débit de gaz prélevé via des joints à l'endroit de la turbine, est caractérisé en ce que la partie mobile de ladite turbine, est montée en porte à faux sur l'arbre du rotor de ladite génératrice, en ce que cette partie mobile est alimentée à sa périphérie par un gaz à haute pression qui ressort par la partie axiale, en ce qu'un joint à labyrinthe est disposé entre la partie mobile de la turbine et la carcasse de la génératrice et en ce que le gaz s'échappant par le joint et refroidissant la génératrice est envoyé dans le circuit de distribution à basse pression du gaz sortant de la partie axiale de la turbine.

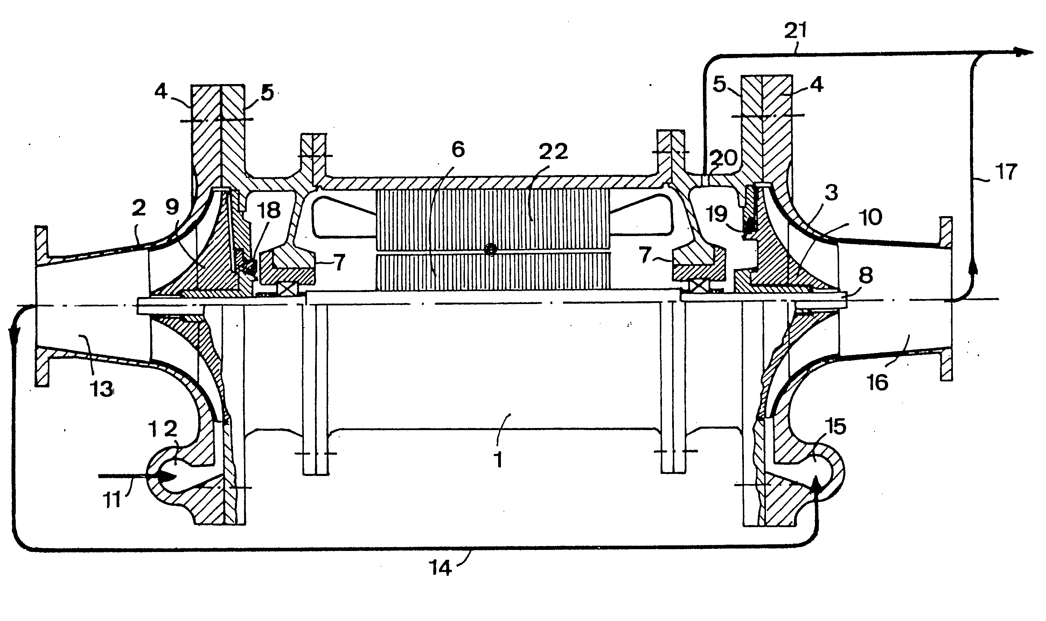

L'invention sera mieux comprise en se référant à la description qui va suivre et au dessin annexé. Sur ce dessin, la figure unique représente schématiquement un ensemble constitué d'une turbine de détente haute pression et d'une turbine de détente basse pression montées de façon étanche de part et d'autre d'une génératrice de courant.

Comme montré sur la figure, l'ensemble est constitué d'une génératrice de courant, par exemple un alternateur 1, d'une turbine centripète haute pression 2 et d'une turbine centripète basse pression 3. Les turbines 2 et 3 sont de construction semblable et servent d'organe de détente à un gaz à haute pression initiale, par exemple du gaz combustible à une pression de 60 bar devant être ramené à une pression d'utilisation de par exemple 15 bar. Les carcasses des turbines 2 et 3 sont montées de façon étanche sur chacune des extrémités de l'alternateur 1 par la bride 4 des turbines et les brides 5 de l'alternateur. L'arbre 8 de l'alternateur, porteur d'un rotor 6, repose sur des paliers 7 solidaires de la carcasse de celui-ci et ses extrémités font saillie à l'intérieur des carcasses des turbines. La partie mobile de la turbine 2, la roue à ailettes 9 et la partie mobile de la turbine 3, la roue à ailettes 10, sont fixées en porte à faux sur les extrémités de l'arbre 8 faisant saillie à l'intérieur des carcasses des turbines. Les paliers 7 sont des paliers à rouleaux ou à billes ou des paliers à graissage aérostatique au gaz. Dans ce dernier cas l'absence d'huile de graissage simplifie l'installation.

La roue à ailettes 9 de la turbine 2 est entraînée par le gaz à haute pression, de l'ordre de 60 bar, amené par une canalisation d'alimentation 11 à un orifice d'entrée 12. Le gaz à haute pression subit une détente dans la turbine et est évacué de celle-ci par un orifice de sortie 13, à une pression de par exemple 30 bar. Par une canalisation 14 il est alors envoyé par un orifice d'entrée 15 dans la turbine à basse pression 3 où il subit une nouvelle détente en entraînant la roue à ailettes 10 de celle-ci et sort par un orifice de sortie 16 à une pression de l'ordre de 15 bar. De l'orifice de sortie 16 le gaz à basse pression est envoyé dans une canalisation de distribution 17 pour alimenter des utilisateurs industriels. Dans le cas où le rapport de détente à réaliser serait moins élevé que dans l'exemple donné ci-dessus, on pourrait ne prévoir qu'une seule turbine, la turbine 2 en l'occurrence et obturer la carcasse de l'alternateur du côté de la turbine 3 par un capot étanche. Il faut noter que dans un cas comme dans l'autre l'obligation de prévoir des moyens d'étanchéité autour des bouts d'arbre est éliminée.

Dans les installations actuelles où il est fait usage d'une turbine et d'un alternateur séparés il faut prévoir des joints d'étanchéité très compliqués sur l'arbre d'entraînement pour éviter une perte de gaz inacceptable. Dans l'ensemble décrit ci-dessus, les joints d'étanchéité 18 et 19 peuvent être fortement simplifiés du fait que l'on profite du gaz s'échappant à travers ceux-ci pour assurer le refroidissement de l'alternateur. De plus, après avoir joué son rôle d'agent de refroidissement le gaz est récupéré et envoyé dans la canalisation de distribution 17. Dans l'exemple illustré, les joints d'étanchéité 18 et 19 sont des joints à labyrinthe et ils sont calculés de manière que la pression du gaz à l'intérieur de la carcasse de l'alternateur soit légèrement supérieure à la contre pression de la turbine à basse pression c'est-à-dire à environ 31 bar dans l'exemple considéré. De cette façon le gaz à basse pression ne peut pénétrer dans la carcasse de l'alternateur et un courant de gaz est assuré à l'intérieur de celle-ci pour réaliser le refroidissement, lequel est assuré principalement par le débit de fuite de la turbine haute pression. Du côté de la turbine basse pression, la carcasse de l'alternateur est percée d'un orifice 20 par lequel le gaz ayant servi au refroidissement de l'alternateur est évacué et injecté dans la canalisation 17 par une conduite 21. Si l'on juge qu'il est nécessaire de refroidir le stator 22 de l'alternateur à l'aide d'un circuit d'eau il est évident que l'on peut refroidir l'eau du circuit à l'aide du gaz haute pression avant son entrée dans la turbine haute pression.

Du fait que les turbines tournent à des vitesses très élevées, le courant engendré par l'alternateur est à une fréquence plus élevée que celle du réseau d'utilisation et il est donc nécessaire de prévoir un changeur de fréquence pour le ramener à la fréquence de celui-ci. Il est bien évident que le refroidissement du changeur de fréquence peut également être assuré par le débit de fuite du gaz ou par l'eau refroidie par le gaz avant son entrée dans la turbine haute pression.

Le grand avantage de l'ensemble ainsi réalisé est, outre la possibilité d'utiliser des joints d'étanchéité simplifiés, la grande compacité de la partie anti-déflagrante qui doit se trouver dans le poste de détente de gaz de l'installation.

**Revendications**

1. Ensemble comprenant au moins une turbine de détente d'un gaz à haute pression disponible à l'entrée de l'ensemble et destiné à alimenter des utilisateurs à une pression réduite et une génératrice de courant électrique refroidie par un débit de gaz prélevé via des joints à l'endroit de la turbine, caractérisé en ce que la partie mobile de ladite turbine est montée en porte à faux sur l'arbre (8) du rotor de ladite génératrice, en ce que cette partie mobile est alimentée à sa périphérie par un gaz à haute pression qui ressort par la partie axiale, en ce qu'un joint à labyrinthe (18) est disposé entre la partie mobile de la turbine et la carcasse de la génératrice et en ce que le gaz s'échappant par le joint (18) et refroidissant la génératrice est envoyé dans le circuit de distribution à basse pression du gaz sortant de la partie axiale de la turbine.

2. Ensemble suivant la revendication 1, caractérisé en ce qu'une turbine de détente basse pression (3) est montée de façon étanche sur la génératrice de courant électrique (1) du côté opposé à la turbine haute pression (2), la sortie axiale du gaz de la turbine haute pression étant reliée à l'entrée périphérique de gaz de la turbine basse pression et en ce qu'un joint d'étanchéité (19) est prévu entre la turbine basse pression et la carcasse de la génératrice de courant.

3. Ensemble suivant la revendication 2, caractérisé en ce que les joints d'étanchéité (18, 19) sont calculés pour instaurer à l'intérieur de la génératrice de courant (1) une pression légèrement supérieure à la contre pression de la turbine basse pression.

4. Ensemble suivant la revendication 2, caractérisé en ce que le gaz ayant pénétré dans la génératrice de courant est évacué par un orifice (20) de la carcasse de la génératrice situé du côté de la turbine basse pression et injecté dans le circuit de distribution de gaz sortant de la turbine de détente basse pression.

**Claims**

1. Assembly comprising at least one turbine for the expansion of a high-pressure gas available at the intake of the assembly and intended for feeding consuming devices at a reduced pressure, and an electrical current generator cooled by a flow of gas drawn off through joints at the locality of the turbine, characterised in that the movable part of said turbine is overhung on the shaft (8) of the rotor of said generator, in that this movable part is fed on its periphery with a high-pressure gas which leaves again via the axial part, in that a labyrinth joint (18) is located between the movable part of the turbine and the shell of the generator, and in that the gas escaping via the joint (18) and cooling the generator is conveyed into the circuit for low-pressure distribution of the gas leaving the axial part of the turbine.

2. Assembly according to Claim 1, characterised in that a low-pressure expansion turbine (3) is mounted in a leak-proof manner on the electrical current generator (1) on the side opposite the high-pressure turbine (2), the axial outlet of the gas from the high-pressure turbine being connected to the peripheral gas intake of the low-pressure turbine, and in that a sealing joint (19) is provided between the low-pressure turbine and the shell of the current generator.

3. Assembly according to Claim 2, characterised in that the sealing joints (18, 19) are designed to establish in the interior of the current generator (1) a pressure slightly greater than the counterpressure of the low-pressure turbine.

4. Assembly according to Claim 2, characterised in that the gas which has penetrated into the current generator is discharged via an orifice (20) in the shell of the generator, this orifice being located at the end nearer the low-pressure turbine, and this gas is injected into the circuit for distribution of gas leaving the low-pressure expansion turbine.

**Ansprüche**

1. Entspannungsturbinen-Generator-Einheit mit wenigstens einer Entspannungsturbine für Gas mit hohem Druck, das am Eingang der Einheit zur Verfügung steht und dazu bestimmt ist, Verbraucher mit verringertem Druck zu versorgen, und mit einem elektrischen Stromerzeuger, der von einer abströmenden Gasmenge gekühlt wird, die über Dichtungsverbindungen vom Ort der Turbine angenommen wird, dadurch gekennzeichnet, daß der bewegliche Teil der besagten Turbine fliegend auf der Welle (8) des Rotors des besagten Generators angeordnet ist, daß dieser bewegliche Teil an seinem Umfang mit einem Gas hohen Druckes versorgt wird, das beim axialen Teil austritt, daß eine Labyrinthdichtung (18) zwischen dem beweglichen Teil der Turbine und dem Gehäuse des Generators angeordnet ist und daß das über die Dichtungsverbindung (18) entweichende und den Generator kühlende Gas in den Niederdruckverteilungskreis des Gases gleitet wird, das am axialen Teil der Turbine austritt.

2. Einheit nach Anspruch 1, dadurch gekennzeichnet, daß eine Niederdruck-Entspannungsturbine (3) in Dichtungsbauweise auf der Seite des Generators montiert ist, die der Hochdruckturbine (2) gegenüberliegt, daß der axiale Ausgang der Hochdruckturbine mit dem peripheren Eingang der Niederdruckturbine verbunden ist und daß eine Dichtungsverbindung (19) zwischen der Niederdruckturbine und dem Generatorgehäuse vorgesehen ist.

3. Einheit nach Anspruch 2, dadurch gekennzeichnet, daß die Dichtungsverbindungen (18, 19) so ausgelegt sind, daß sie im Inneren des Stromerzeugers (1) einen Druck aufbauen, der geringfügig höher ist als der Gegendruck der Niederdruckturbine.

4. Einheit nach Anspruch 2, dadurch gekennzeichnet, daß das Gas, das den Stromerzeuger durchsetzt hat, über eine auf der Seite der Niederdruckturbine am Gehäuse des Stromerzeugers angeordnete Öffnung (20) abgesaugt und in den Verteilerkreis für das die Niederdruckturbine verlassende Gas eingeführt wird.